# EUROPEAN PATENT APPLICATION

(11) **EP 3 151 219 A1**
(43) Date of publication of application: **05.04.2017**
(21) Application number: 15802996.7
(22) Date of filing: 27.05.2015
(51) Int. Cl.: G09F 5/00, B32B 27/00, B41J 2/01, B41M 5/00, B41M 5/50, B41M 5/52, G09F 7/16

(54) **PRINTED MAKEUP PRODUCT AND METHOD FOR MAKEUP**

(30) Priority: 02.06.2014 JP 2014113685
(71) Applicant: Tokuyama Corporation, Shunan-shi, Yamaguchi-ken 745-8648 (JP)
(72) Inventor: HIRAYAMA, Koki, Shunan-shi Yamaguchi 745-8648 (JP)
(74) Representative: Duckworth, Timothy John
(86) International application number: PCT/JP2015/065219
(87) International publication number: WO 2015/186583

(57) **Abstract**

The printed makeup product of the present invention includes a base sheet 1, an inorganic solid layer 3 provided on the base sheet, and an ink-jet printed image 5 formed on the inorganic solid layer 3. A makeup material is applied onto the ink-jet printed image 5. The surface of the inorganic solid layer 3, upon observation in an electron micrograph at a magnification of 100, is a rough surface where indefinitely shaped protrusions are present in a proportion of 10 to 30% per unit area. Of the indefinitely shaped protrusions, 50 to 300 of them per mm² are observed having a major diameter of 10 to 300 µm.

## Description

### Technical Field

This invention relates to a printed makeup product and a makeup method utilizing the printed product.

### Background Art

With the widespread use of personal computers and digital cameras in general households, ink-jet printers capable of printing vivid full-color images have now been widely used partly owing to their reasonable prices. As printing papers for use with the ink-jet printers, ordinary wood-free papers and coated papers are difficult to use from the viewpoint of performance. This is because the printing papers are required to have properties such that ink deposited on the paper surface is promptly absorbed to the inside of the paper, spreading or oozing of ink drops on the paper surface is suppressed to form vivid images, and the resulting images have such excellent fastness as not to undergo color fading for long periods.

In order to impart such properties to the printing surface (paper surface), it has been proposed to apply various inorganic solid materials together with a binder onto the surface of the paper, thereby forming an inorganic solid layer. For example, the present applicant proposed in Patent Document 1 a printing sheet comprising a substrate sheet, and a printing layer (inorganic solid layer) formed on the surface of the substrate sheet and containing calcium hydroxide.

The printing sheet proposed by Patent Document 1 has the following characteristics: When printing is done on the surface of the printing layer by an ink-jet printer or the like, carbonation of calcium hydroxide proceeds after the printing, converting the calcium hydroxide into calcium carbonate, with the result that the printed image is firmly held on the printing surface. Moreover, the resulting printed image is a robust image having a feeling of ruggedness and picturesque depth. Besides, ink components forming the image are protected from ultraviolet rays and ozone. Such a printing sheet is exceptionally good in terms of long-term preservability of the printed image.

The above-mentioned printing sheet has a peelable protective sheet provided on the surface of the inorganic solid layer serving as the printing surface. That is, in order that the inorganic solid layer, such as the printing layer containing calcium hydroxide, is not damaged by the rubbing of the sheet against another sheet, pressing from the outside, or the like, the peelable protective sheet is provided for protecting the surface of the inorganic solid layer. In performing printing, the protective sheet is peeled off before printing, and the printing sheet is used.

In the printing sheet having such a protective sheet, the surface of the inorganic solid layer is relatively low in hardness, with the protective sheet being provided. When the protective sheet closely adhered to the surface of the inorganic solid layer is peeled off at the time of printing, therefore, a surface of the protective sheet is transferred to the surface of the inorganic solid layer where printing is to be performed.

As noted above, the surface of the protective sheet (the sheet closely adhered to the surf ace of the inorganic solid layer) is reflected on the surface of the inorganic solid layer by transfer. Thus, a fiber sheet of a nonwoven fabric is preferably used as the protective sheet. When printing is performed on the surface of the inorganic solid layer having the surface of the fiber sheet transferred thereto, irregularities provided by the fibers impart a stereoscopic effect and a feeling of depth to the printed image.

In connection with the printing sheet provided with the protective sheet as described above, the present applicant proposed earlier what irregularities should be formed on the surface of the inorganic solid layer by peeling off the fiber sheet (see Patent Document 2). The present applicant further proposed a method for producing a design sheet provided with a color gamut, which is not obtainable by ink-jet printing, by applying a pigment onto an inorganic solid layer formed with a printed image by ink-jet printing, and then fixing the pigment (Japanese Patent Application No. 2014-044006).

### Prior Art Documents

### Patent Documents

Patent Document 1: WO2008/013294
Patent Document 2: WO2012/165554

### Summary of the Invention

### Problems to be solved by the invention

The present inventors have conducted further study on the above-mentioned printing sheet having the protective sheet so provided on the inorganic solid layer as to be peeled off at the time of ink-jet printing. As a result, they have found that the printing sheet having as an ink-jet printing layer the inorganic solid layer roughened on the surface can be utilized for makeup. Based on this finding, they have accomplished the present invention.

That is, the present invention aims at providing a printed makeup product which is obtained using a printing sheet having a surface of an inorganic solid layer as an ink-jet printing surface; or a makeup method using the printing sheet.

### Means for solving the problems

According to the present invention, there is provided a printed makeup product including:
a base sheet; an inorganic solid layer provided on the base sheet;
an ink-jet printed image formed on the inorganic solid layer; and
a makeup material applied onto the ink-jet printed image; wherein the surface of the inorganic solid layer, upon observation in an electron micrograph at a magnification of 100, is a rough surface where indefinitely shaped protrusions are present in a proportion of 10 to 30% per unit area, and 50 to 300 of the indefinitely shaped protrusions per mm² are observed having a major diameter of 10 to 300 µm.

In the printed makeup product of the present invention, it is preferred that
(1) the inorganic solid layer contains calcium hydroxide;
(2) the rough surface of the inorganic solid layer is formed by closely adhering a fiber sheet to the inorganic solid layer, and peeling off the fiber sheet;
(3) a protective layer of a water-insoluble resin is formed on a layer of the makeup material or on the ink-jet printed image; and
(5) the water-insoluble resin is an acrylic resin.

According to the present invention, there is also provided a makeup method including:
providing a printing sheet comprising a base sheet, an inorganic solid layer provided on the base sheet, and a fiber sheet closely adhered onto the inorganic solid layer;
peeling off the fiber sheet from the printing sheet to turn a surface of the inorganic solid layer into a rough surface;
forming an ink-jet printed image of a portrait photograph on the rough surface by ink-jet printing; and
applying a makeup material to the ink-jet printed image.

In the makeup method, it is preferred that the surface of the inorganic solid layer, upon observation in an electron micrograph at a magnification of 100, is the rough surface where indefinitely shaped protrusions are present in a proportion of 10 to 30% per unit area, and 50 to 300 of the indefinitely shaped protrusions per mm² are observed having a major diameter of 10 to 300 µm.

### Effects of the invention

In the printed makeup product of the present invention, the makeup material is applied onto the ink-jet printed image formed on the inorganic solid layer provided on the base sheet. As far as the present inventors are aware, such a printed makeup product is a novel printed product which has not been known at all.

Such a printed product has irregularities formed in the printing surface (surface of the inorganic solid layer) where ink-jet printing is to be performed. Thus, the ink-jet printed image printed on this printing surface, unlike the one in an ordinary photograph or the like, has irregularities similar to those in a real thing seen with the naked eye. In an ink-jet printed image of a portrait photograph, for example, the surface of the image of the photographed person's skin looks similar to the actual skin of the person. By applying various cosmetics, etc. , as makeup materials, onto this printed image, therefore, an image close to the actual person who wore makeup can be obtained.

In particular, makeup is applied to a portrait photograph or the like using the printed product, and a predetermined protective layer is provided thereon, whereby the portrait photograph or the like can be preserved permanently.

The makeup method for obtaining the above-described printed makeup product can repeat a process which comprises applying makeup to the surface of a print close to the human skin with the use of a pigment having gloss or the like inexpressible by ink-jet printing, removing the makeup, as appropriate, and applying makeup again. Thus, the makeup method can be utilized, for example, for makeup at a cosmetics counter (may be called touchup).

### Brief Description of the Drawings

[Fig. 1] is a view showing an example of the cross-sectional structure of a printed makeup product according to the present invention.
[Fig. 2] is a view showing the cross-sectional structure of a printing sheet, which is used to prepare the printed makeup product shown in Fig. 1, along with a protective sheet.
[Fig. 3] is an electron micrograph (magnification 100X) of a transfer surface of the protective sheet provided so as to be closely adhered to the printing sheet shown in Fig. 2.
[Fig. 4] is an electron micrograph (magnification 100X) of a surface of an inorganic solid layer (printing surface) of the printing sheet shown in Fig. 2.

### Mode for Carrying Out the Invention

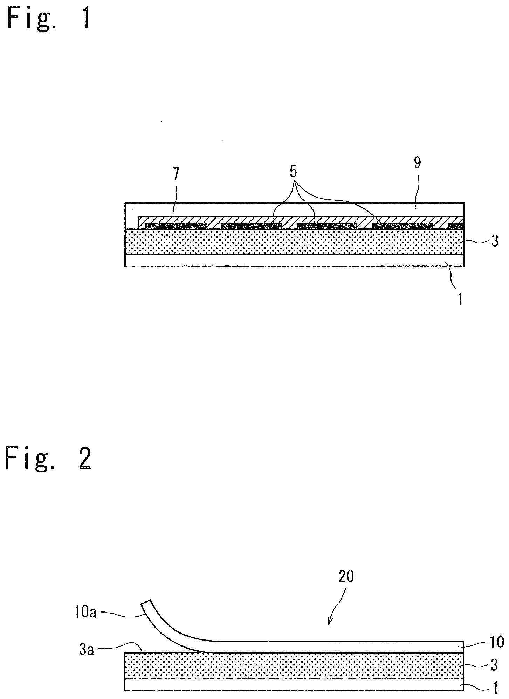

Referring to Fig. 1, the printed makeup product of the present invention has on a base sheet 1 an inorganic solid layer 3 serving as a printing surface. On the surface of the inorganic solid layer 3, an ink-jet printed image (may hereinafter be referred to simply as a printed image) 5 is formed by ink-jet printing. Makeup is applied onto the printed image 5 to form a makeup layer 7, and a protective layer 9 is further provided, if necessary.

Such a printed makeup product is prepared, for example, using the printing sheet described in the aforementioned Patent Document 2. By reference to Fig. 2, such a printing sheet (indicated entirely at 20 in Fig. 2) is supplied in a state where a fiber sheet 10 is stuck onto and closely adhered onto a surface of an inorganic solid layer 3 formed on a base sheet 1. At the time of ink-jet printing, the fiber sheet 10 is peeled off from the inorganic solid layer 3, and ink-jet printing is performed on a surface 3a (i. e. , printing surface) of the exposed inorganic solid layer 3.

### <Printing sheet 20>

In the above-mentioned printing sheet 20, the base sheet 1 supporting the inorganic solid layer 3 is not particularly limited, but may be formed from any material, if its surface can support the inorganic solid layer 3.

Suitable examples are wood pulp paper, and various resin sheets or resin films of vinyl resins such as polyvinyl alcohol and polyvinyl acetate, acrylic resins such as poly (meth) acrylate, polyolefin resins such as polyethylene and polypropylene, and polyester resins such as polyethylene terephthalate. There may also be used woven fabrics or nonwoven fabrics comprising fiber materials such as glass fiber, vinylon fiber, polypropylene fiber, polyester fiber, polyethylene terephthalate fiber, acrylic fiber, aramid fiber, and carbon fiber, as well as laminated films or sheets thereof.

The preferred base sheet 1 has flexibility and moderate nerve. Even if folded, the base sheet 1 having such properties minimally forms a crease, and can effectively suppress such an inconvenience that cracks are formed in the inorganic solid layer 3 provided on the base sheet 1. The materials for the base sheet 1 are considerably limited, but generally pulp paper is preferably used. Pulp paper is a generally available paper, has flexibility and bending strength, and enables adherability to the inorganic solid layer 3 to be satisfactory. In addition to the pulp paper, there can be used a synthetic paper prepared by mixing chemical fibers such as glass fibers, polypropylene fibers, polyethylene fibers, polyester fibers, or vinylonfibers, as binder fibers, with the pulp paper.

The surface of the base sheet 1 may be subjected to corona treatment or the like for improved hydrophilicity. This makes it possible to enhance joining strength between the inorganic solid layer 3 and the base sheet 1.

The thickness of the base sheet 1 is set at such a thickness that the printing sheet 20 can easily pass through an ink-jet printer. Usually, the thickness is set in a range of the order of 0.02 to 0.5 mm in conformity with the grade of the printer to be used.

In the above printing sheet 20, the inorganic solid layer 3 may be formed from various inorganic materials, for example, metal oxides such as silica, alumina and zirconia, and calcium salts such as calcium carbonate and gypsum (calcium sulfate), as long as it is a stable solid layer capable of undergoing ink-j et printing on its surface, and this surface is a rough surface as will be described later.

From the viewpoints that its surface is a rough surface as described later, the rub resistance and ultraviolet resistance of the printed image are enhanced, and a fast and stable printed image is formed, however, it is optimal for the inorganic solid layer 3 containing calcium hydroxide to be formed.

The inorganic solid layer 3 containing calcium hydroxide, as described in Patent Document 2 as well, is formed by coating the hydrophilic surface of the base sheet 1 with a kneaded product of a powder of calcium hydroxide and water, and removing water in the resulting kneaded product layer by drying or the like. During the drying step, some of calcium hydroxide in the layer reacts with a carbon dioxide gas in the air, whereby the calcium hydroxide partly turns into calcium carbonate to form a plaster precursor (a mixture of calcium hydroxide and calcium carbonate). If the plaster precursor is further allowed to stand in the air, calciumhydroxide remaining in the plaster precursor (the mixture of calcium hydroxide and calcium carbonate) reacts with the carbon dioxide gas in the air to form calcium carbonate, with the result that carbonation further proceeds to form plaster (calcium carbonate formed by carbonation of calcium hydroxide) . In this manner, a layer containing the plaster precursor having calcium carbonate present upon carbonation of part of the calcium hydroxide is provided, as the inorganic solid layer 3, on the surface of the base sheet 1. Such a plaster precursor is lower in hardness than plaster having calcium hydroxide carbonated completely (calcium carbonate formed by carbonation of calcium hydroxide). Thus, when the fiber sheet 10 to be described later is peeled off, a predetermined rough surface is easily formed. Moreover, the fiber sheet 10 can be applied without the use of a particular adhesive.

Thus, the inorganic solid layer 3 containing the plaster precursor may be in a state before the complete carbonation of calcium hydroxide (namely, the state where calcium hydroxide is contained). Preferably, however, the calcium hydroxide in the plaster precursor (the mixture of calcium hydroxide and calcium carbonate) is contained in an amount of at least 10% by weight, preferably 20% by weight or more (the amount of calcium carbonate is 90% by weight or less, preferably 80% by weight or less). If the content of the calcium hydroxide is lower than the above range, the carbonation of the calcium hydroxide, which proceeds after formation of the ink-jet printed image 5 on the inorganic solid layer 3 to be described later, does not result in the formation of a fast plaster layer (calciumcarbonate layer). In this case, when the makeup material is applied onto the ink-jet printed image 5, the possibility arises that the surface of the inorganic solid layer 3 will collapse, causing decreased utility of the makeup.

A larger amount of the calcium hydroxide in the inorganic solid layer 3 is desirable for attaining the aforementioned object. If its amount is too large, however, the hardness of the inorganic solid layer 3 is insufficient, and damage to the inorganic solid layer 3, for example, tends to occur during the printing step. Preferably, therefore, the amount of calcium hydroxide in the inorganic solid layer 3 is kept down to 90% by weight or less, preferably 80% by weight or less.

The amount of the calcium hydroxide in the inorganic solid layer 3 can be confirmed by differential thermal analysis.

The content of calcium hydroxide in the inorganic solid layer 3 can be adjusted based on the carbonation rate of calcium hydroxide for use in the formation of this layer (i. e. , the weight ratio of the resulting calcium carbonate to the weight of the calcium hydroxide used for preparing the slurry) and the proportions of additives to be described later, such as a binder, an inorganic fine aggregate, and a liquid-absorbing inorganic powder.

After the image is printed, the above-described inorganic solid layer 3 is left to stand in the atmosphere, whereby calcium hydroxide in the layer is carbonated, and finally converted into plaster (calcium carbonate formed by carbonation of calcium hydroxide). In order to improve the toughness of the inorganic solid layer 3, it is preferred that a solid component of a polymer emulsion is contained as a binder in the layer. The polymer emulsion is a dispersion of a monomer, an oligomer or a polymer thereof in an aqueous medium. Examples of the polymer emulsion are emulsions of polymers, such as an acrylic resin, a styrene-acrylate resin, a vinyl acetate resin, polyurethane, and styrene/butadiene rubber. In the drying step, the solvent (water) in the emulsion evaporates, and the polymer component in the emulsion remains in the inorganic solid layer 3. If the solid component (i.e., polymer) is present in an excess amount in the emulsion, permeation of the printed image (printing ink) into the inorganic solid layer tends to decrease. To enhance the toughness of the inorganic solid layer 3 and ensure the permeation of the ink, therefore, it is generally preferred that the solids content of the polymer emulsion in the layer 3 is in a range of 3 to 50% by weight.

In addition to the above emulsion, the inorganic solid layer 3 may further incorporate various additives for adjusting physical properties, such as various fiber materials, an inorganic fine aggregate, a liquid-absorbing inorganic powder, etc. These additives act to improve the physical properties, such as strength, of the inorganic solid layer 3 functioning as the printing layer.

Examples of the fibermaterial include glass fiber, vinylon fiber, polypropylene fiber, polyester fiber, polyethylene terephthalate fiber, acrylic fiber, aramid fiber, carbon fiber, and metal fiber. In terms of its shape, the fiber can be used as a staple fiber, a filament, a woven fabric, or a nonwoven fabric. Of them, the staple fiber is particularly effective in improving the toughness and cutting workability of the inorganic solid layer 3. The length and diameter of the staple fiber are not particularly limited, but the length is 0.2 mm to 10 mm, particularly 0.5 to 5 mm, and the diameter is 2 to 50 µm, particularly 5 to 20 µm. These dimensions are preferred in order to further improve the toughness of the inorganic solid layer 3 and, in some cases, to impart excellent cutting workability to the inorganic solid layer 3.

The inorganic fine aggregate is an inorganic particulate material having an average particle size in a range of the order of 0.01 to 0.1 mm and, within this range, one having an average particle size which is a quarter or less of the thickness of the inorganic solid layer 3. Concrete examples include silica sand, powdered white limestone, mica, glazed silica sand, glazed mica, ceramic sand, glass beads, perlite, and calcium carbonate.

Further preferably, a liquid-absorbing inorganic powder is incorporated into the inorganic solid layer 3 in order to avoid a decline in the affinity for the hydrophilic ink caused by the incorporation of the polymer emulsion into the inorganic solid layer 3, and to compensate for the liquid-absorbing properties decreasing with the progress of carbonation of calcium hydroxide. The liquid-absorbing inorganic powder is a fine inorganic powder which is porous and whose oil absorption is as high as 100 ml/100 g or more, for example, an alumina hydrate powder, a zeolite powder or a silica powder having a volume-based average particle size (D₅₀), as measured by a laser diffraction scattering method, of 0.5 µm or less.

The aforementioned polymer emulsion is effective in improving the toughness and enhancing the joining strength between the base sheet 1 and the inorganic solid layer 3. However, the polymer emulsion may cause inconveniences such as a decline in the hydrophilicity of the inorganic solid layer 3, resulting in a situation where when printing is performed using a hydrophilic ink, for example, the ink is repelled, and the printed image is blurred. Here, the use of the above-mentioned liquid-absorbing inorganic powder improves the absorbability of the printing ink, and can thus effectively prevent the above inconveniences. It is particularly preferred that the liquid-absorbing inorganic powder is incorporated, in an amount of the order of 1 to 20% by weight, into the inorganic solid layer 3 containing the plaster.

In addition to the above additives, one of, or a combination of two or more of, various publicly known additives can be incorporated in the inorganic solid layer 3, in accordance with an intended object. Anyway, the additives should be incorporated in such an amount as not to impair the permeation of the printing ink into the inorganic solid layer 3 or the fixing of the former to the latter. For example, it is desirable that various types of additives be incorporated in a range in which the content of calcium carbonate formed by the carbonation of calcium hydroxide (i.e., the content of the calcium carbonate when the carbonation rate is 100%) is maintained at 50% by weight or more.

The thickness of the inorganic solid layer 3 is set to be in a suitable range where printing is possible. Generally, the preferred thickness is 0.05 to 0.5 mm, particularly, a value of the order of 0.1 to 0.25 mm. If the thickness is too small, there is a possibility that image fixing properties upon permeation of the printing ink when the image is printed will decrease, or the depth of the developed image associated with ruggedness will be spoiled. Too large a thickness, on the other hand, causes an economic disadvantage, and is apt to form creases when bent, thus arousing possibilities of limitations on the printer to be used in printing.

The above inorganic solid layer 3 is prepared by coating one surface of the base sheet 1 with an inorganic slurry for forming the layer 3, for example, a calcium hydroxide slurry or a slurry of the aforementioned inorganic oxide particles such as silica particles, and further sticking the fiber sheet 10 onto the coating, followed by moderate drying (see Fig. 2). The slurry for forming the inorganic solid layer containing calcium hydroxide is obtained by adding the aforementioned binder and various additives to the kneaded product of the powder of calcium hydroxide and water.

The calcium hydroxide powder for use in preparing such a slurry is preferably one containing fine particles with a particle size of 5 µm or less in an amount of 20 to 80% by weight, and coarse particles with a particle size of 10 to 50 µm in an amount of 10 to 40% by weight. The fine particle component is useful for imparting the shape retainability and strength of the inorganic solid layer 3, whereas the coarse particle component is useful for ensuring the permeation properties of the image. The use of the calcium hydroxide powder containing the fine particle component and the coarse particle component in the above amount ratio is very preferred for forming the plaster layer having satisfactory strength and durability without impairing the image permeation properties. For example, if the calcium hydroxide powder comprising the above fine particle component only is used, the permeation properties of ink may be impaired, the printed image may be blurred, or the fastness of the printed image may decrease.

Also preferably, the slurry incorporates a surfactant for uniformly dispersing various compounding ingredients, and incorporates a thickening agent or the like, as appropriate, to achieve a moderate viscosity so that the kneaded product will not drip during coating. The slurry can be applied using a bar coater, a roll coater, a flow coater, a knife coater, a comma coater, spraying, dipping, ejection, or mold material transfer. If necessary, a trowel holder, a cap squeezer, roller compaction, or a monoaxial press, for example, can be employed.

The thickness of the slurry coated is set so that the thickness after drying becomes the thickness of the inorganic solid layer 3. Drying after coating with the slurry may be performed to such a degree that the water content of the inorganic solid layer 3 is of the order of 5% or less. If the water content is too high, the shape of the layer cannot be maintained. If printing is done, with the high water content being maintained, bleeding of the ink or the like is apt to occur. Furthermore, when the fiber layer 10 is peeled off, a predetermined rough surface may fail to be formed. Alternatively, it may become difficult to stick the fiber sheet 10 to the inorganic solid layer 3. Of course, the fiber sheet 10 can be stuck using a pressure-sensitive adhesive or an adhesive. In this case, however, peeling off the fiber sheet 10 may be difficult.

The drying is performed by blowing hot air, for example, thereby heating the coated layer of the slurry to a temperature of the order of 40 to 150°C. Here, care should be taken, because if the heating temperature is higher than required, deformation of the base sheet 1 or the fiber sheet 10 due to heat occurs.

The carbonation reaction of calcium hydroxide proceeds upon contact with the carbon dioxide gas. As long as the slurry is preserved in a sealed state in an air-impermeable bag or a container, there is no problem in maintaining a predetermined carbonation rate and in keeping the amount of calcium hydroxide in the inorganic solid layer 3 in a certain range.

As shown in Fig. 2, the fiber sheet 10 is pasted onto the inorganic solid layer 3 of the printing sheet 20. With the fiber sheet 10 being tightly adhered, the printing sheet 20 is supplied and, at the time of ink-jet printing, the fiber sheet 10 is peeled off, whereupon ink-jet printing is performed on the surface 3a of the inorganic solid layer 3.

In detail, the surface 3a of the inorganic solid layer 3 has low surface hardness because of incorporation of some water or incomplete carbonation. When the fiber sheet 10 is peeled off, therefore, a surface portion of the inorganic solid layer 3, which has penetrated into the fiber sheet 10 through its transfer surface 10a, is detached together with the fiber sheet 10, or destroyed. As a result, the transfer surface 10a of the fiber sheet 10 is transferred to the surface 3a of the inorganic solid layer 3.

The fiber sheet 10 of the above configuration, needless to say, also functions as a protective sheet for protecting the surface of the inorganic solid layer 3. That is, the inorganic solid layer 3 is formed from inorganic particles (e. g. , particles of calcium hydroxide or calcium carbonate, or particles of an inorganic oxide such as silica). Thus, the inorganic solid layer 3 is relatively brittle, and is apt to suffer inconvenience such that it is scarred by pressure from the outside, or that its surface falls off. However, the above fiber sheet 10, provided since immediately after the production of the printing sheet 20 until immediately before printing, can effectively prevent such inconvenience.

In the present invention, the transfer surface 10a of the fiber sheet 10 is transferred to the surface 3a of the inorganic solid layer 3. By using this surface 3a as a printing surface, therefore, makeup of the ink-jet printed image 5 to be described later can be done.

As the fiber sheet 10, therefore, one having depressions formed on its surface as will be mentioned later is used. In particular, use is made of a nonwoven fabric comprising heat-fusible fibers and adjusted so as to transfer predetermined depressions by pressure bonding using a heated roll.

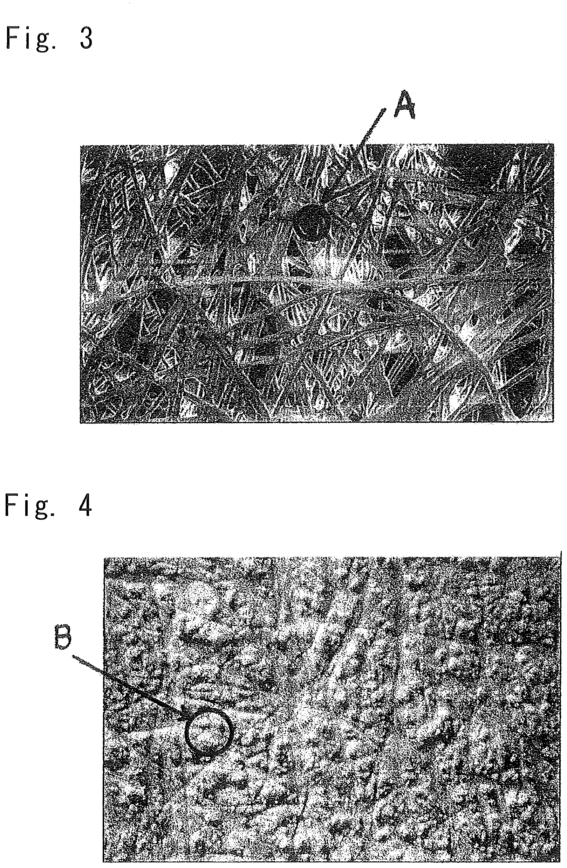

That is, the transfer surface 10a of the fiber sheet 10 used in the present invention is a surface where a continuous flat surface and indefinitely shaped depressions surrounded by the flat surface are intermingled, upon observation in an electron micrograph at a magnification of 100, as shown in Fig. 3. That is, in Fig. 3, an encircled black region is observed as the indefinitely shaped depression A (i.e., a gap between fibers), and a high-contrast portion around the depression A constitutes the flat surface.

In the transfer surface 10a of the above configuration, settings are made such that the flat surface is present in a proportion of 70 to 90% per unit area, and 50 to 300 of the depressions A per mm², whose major diameter is 10 to 300 µm, are observed so as to be surrounded with the flat surface. These features are important in the present invention in order to form the ink-jet printed image 5 excellent in makeup characteristics on the surface 3a of the inorganic solid layer 3. That is, the transfer surface 10a of the fiber sheet 10 is closely adhered to and laminated onto the surface of the inorganic solid layer 3, whereby the inorganic solid particles in the surface portion of the inorganic solid layer 3 enter the indefinitely shaped depressions A of the transfer surface 10a. Thus, when the fiber sheet 10 is peeled off, the parts entering the depressions A of the transfer surface 10a are ruptured. As a result, indefinitely shaped protrusions corresponding to the indefinitely shaped depressions A are formed in the surface 3a of the inorganic solid layer 3.

As noted above, a predetermined number of the indefinitely shaped depressions A of the above size are formed in the transfer surface 10a, so that the indefinitely shaped protrusions of a predetermined size are correspondingly transferred to the surface 3a of the inorganic solid layer 3. Thanks to the presence of such indefinitely shaped protrusions, the printed image 5 formed on the surface 3a of the inorganic solid layer 3 is meticulous in terms of a three-dimensional effect and a sense of depth. Besides, when a portrait photograph (face, in particular) is printed, for example, the surface of the print is visible in a state very akin to the human skin. Consequently, excellent makeup characteristics are exhibited.

To form the indefinitely shaped depressions A of the above size in the predetermined proportion, it becomes necessary to use a nonwoven fabric sheet comprising heat-fusible fibers, and pressure bond the nonwoven fabric sheet by means of a heating roll, followed by using it as a mold material sheet. That is, the surface of the fibers is turned into a flat surface by pressure bonding using the heating roll, whereby the depressions A can be allowed to exist clearly.

If a woven fabric sheet is used instead of the nonwoven fabric sheet, for example, heat fusion converts the transfer surface 7a into a flat surface, thus making it difficult to form a surface with irregularities in the surface 3a of the inorganic solid layer 3. Even if depressions can be provided clearly, there will be a surface where definitely shaped depressions are arranged regularly, because the fibers are woven regularly. This poses a possibility that the printed image formed on the surface of the inorganic solid layer 3 will be considerably different from the human skin, impairing the makeup characteristics.

Even when a nonwoven fabric sheet is used, some of the fibers deposit on the surface of the inorganic solid layer 3 when the sheet is peeled off, if the sheet has not been heat-fused. Consequently, printability will be impaired and, since the surface of the fibers has not been collapsed by heat, the depressions A cannot be existent clearly. Thus, the protrusions transferred to the surface 3a of the inorganic solid layer 3 are unstable, and a printing surface capable of imparting fine image quality stably cannot be formed.

Further, it is preferred that the nonwoven fabric sheet be formed from heat-fusible core-sheath fibers (high-melting fibers as a core material, and low-melting fibers as a sheath). For example, a nonwoven fabric sheet comprising commercially available core-sheath fibers having polypropylene as a core material and polyethylene as a sheath is used preferably. By using such a nonwoven fabric comprising the core-sheath fibers, the low-melting fibers of the sheath portion are fused, without fusion of the core portion, upon pressure bonding by the heated roll. Consequently, flattening can be performed simultaneously with fusion bonding of the fibers, with the shape of the fibers being retained, whereby the aforementioned flattened portion and the indefinitely shaped depressions A (i.e., gaps between the fibers) can be formed.

The pressure bonding by the heated roll is performed, with the temperature, time and roll pressure being adjusted so that the depressions as the gaps between the fibers will not be collapsed. When the nonwoven fabric of core-sheath fibers as mentioned above is used, for example, it is preferred that the pressure bonding be performed at a temperature which is equal to or higher than the melting point of the low-melting fibers as the sheath, but lower than the melting point of the high-melting fibers as the core. In the case of a nonwoven fabric sheet of core-sheath fibers having polypropylene as a core material and polyethylene as a sheath, for example, it is desirable to carry out the pressure bonding at a temperature of the order of 90 to 150°C.

The fibers constituting the nonwoven fabric, and the weight per unit area of the fibers are determined or set so that the flat portion and the depressions A of the predetermined size will be formed in the aforementioned proportions. With the above-mentioned core-sheath fibers (polypropylene fibers/polyethylene fibers), for example, filaments with a fiber diameter of the order of 10 to 50 µm are preferred, and their weight per unit area is preferably set at a value of the order of 30 to 120 g/m². According to these features, for example, the fiber sheet 10 can be held closely adhered to the surface of the inorganic solid layer 3 at a suitable peel strength, so that a stable transfer effect and a protective effect can be exhibited.

As described above, the nonwoven fabric sheet having the transfer surface 7a undergoing pressure bonding by a heated roll and satisfying predetermined conditions is used as the fiber sheet 10. This fiber sheet 10 is provided so as to be closely adhered to the surface of the inorganic solid layer 3, and is then peeled off, whereby the surface 3a of the inorganic solid layer 3 is rendered a surface with excellent printability, and the printed image 5 having excellent makeup characteristics can be formed.

The above surface 3a of the inorganic solid layer 3 is a surface where the continuous flat surface and the indefinitely shaped depressions surrounded by the flat surface are intermingled, upon observation in an electron micrograph at a magnification of 100, as shown in Fig. 4. That is, in Fig. 3, the encircled black region is an indefinitely shaped protrusion B, this protrusion B is observed corresponding to the depression A (the gap between fibers) in the transfer surface 7a of the fiber sheet 10, and a low-contrast portion around the protrusion B constitutes the flat surface.

In the printing sheet 1 of the present invention, as shown in Fig. 3, the indefinitely shaped protrusions B are formed as a result of the transfer of the indefinitely shaped depressions A of the transfer surface 7a of the fiber sheet 10 to the surface 3a of the inorganic solid layer 3. Upon observation in an electron micrograph at a magnification of 100, the indefinitely shaped protrusions B are present in a proportion of 10 to 30% per unit area, and 50 to 300 of the indefinitely shaped protrusions B per mm², whose major diameter is 10 to 300 µm, are observed. That is, fine protrusions of an indefinite shape are present numerously and randomly in the flat surface. Since a printing ink adheres to and penetrates into the flat surface and the protrusions B, a meticulous printed image 5 can be formed, without detriment to natural feelings such as a three-dimensional effect and a sense of depth. When such a printed image 5 is the face of a person in a portrait photograph, its surface is visually recognized as akin to the human skin. Consequently, excellent makeup characteristics are exhibited.

That is, the indefinitely shaped protrusions B having an amorphous shape and a certain size are formed randomly in large numbers between flat portions. Thus, particularly fine image quality can be effectively reflected, without impairment of natural feelings. If the protrusions are in a definite shape such as a round or square shape, or they are arranged regularly, even when the numerous protrusions are formed in large numbers, naturalness is lost, and the impression of the image being mechanically synthesized is given. Furthermore, one will have the impression that the printed image is entirely different from the human skin.

In addition, the surface 3a of the inorganic solid layer 3 is free from the deposition of fibers, and deterioration of image quality due to fiber marks or the like is also effectively prevented.

The above-described printing sheet 20 is commercially available in a form in which it has the fiber sheet 10 stuck thereto, as shown in Fig. 2. Usually, however, in order to maintain the inorganic solid layer 3 in a state where it has not been completely carbonated, or in a water-containing state where it contains some water, a bundle of the laminates 10 is packaged in a gas barrier resin film or the like for preservation. If a plaster-containing inorganic solid layer 3 is allowed to stand in the atmosphere, for example, carbonation of the plaster precursor proceeds, with the result that printability (e.g., permeation and fixability of the image), etc. decline. To avoid such an inconvenience, it is necessary to suppress carbonation up to a point in time at which printing is performed. For this purpose, packaging in a gas barrier resin film or the like is required.

It goes without saying that the printing sheet 20 cut to a suitable size is wound into a roll, and this roll can be packaged in a gas barrier film for preservation.

There is no particular limitation on the gas barrier film, and various resin films in general use as packaging films are used. From the viewpoint of cost, etc., however, a polyolefin film such as polyethylene film, polypropylene film or polyester film is preferred.

The printing sheet 20 marketed in the above manner is stripped of the packaging film, and then the fiber sheet 10 is peeled off to expose the surface 3a of the inorganic solid layer 3, whereafter printing is performed on this surface.

### <Formation of printed image 5>

In the printed makeup product of the present invention, the surface 3a of the inorganic solid layer 3 exposed in the above manner is subjected to printing by an ink-jet printer using an ink-jet ink having a predetermined pigment or dye dispersed or dissolved therein, whereby the ink-jet printed image 5 is formed, as shown in Fig. 1. The most preferred ink-jet ink used is a hydrophilic ink having a water-soluble dye dissolved therein or a pigment dispersed in water (or a water-alcohol mixed solvent) with a surfactant or the like. When such a hydrophilic ink is used, a sharp ink-jet printed image 5 without bleeding and held stably can be formed on the inorganic solid layer 3. In the present invention, in particular, ink using a pigment can be used preferably.

If the inorganic solid layer 3 is a layer containing calcium hydroxide, upon printing of the printed image in the above manner, the inorganic solid layer 3 is allowed to stand in the atmosphere (usually for about 1 to 30 days), or it is allowed to stand in a constant temperature and humidity chamber (usually for about 12 to 100 hours) filled with a high concentration carbon dioxide gas. As a result, it absorbs the carbon dioxide gas, and carbonation of the remaining calcium hydroxide proceeds to form plaster (calcium carbonate formed by carbonation of calcium hydroxide). The printed image 5, in particular, permeates the porous plaster with irregularities, and becomes fixed there. Compared with a photographic image or the like, the printed image 5 is akin to a real thing. The resulting printed image 5 is excellent in fastness and, even if rubbed, it does not suffer a color loss or the like. Moreover, its ink components can be protected from ultraviolet rays, etc., and the printed image is held stable for a long period of time.

In the present invention, in particular, the indefinitely shaped protrusions of a certain shape are formed in large numbers on the surface of the inorganic solid layer 3. Particularly when a human figure, especially, a photograph of a face, is printed, therefore, the surface of the printed image 5 is in a state similar to a stereoscopic human skin, as stated earlier. The surface is thus optimal for application thereon of a makeup material to be described later.

### <Formation of makeup layer 7>

With the printed makeup product of the present invention, after formation of the ink-jet printed image 5, a makeup material is applied at a time when the carbonation rate reaches 50% by weight or more, whereby the makeup layer 7 is formed (see Fig. 1). That is, according to the present invention, the ink-jet printed image 5 is formed on the surface having moderate irregularities, namely, in a nearly natural state, so that the makeup material can be applied without bleeding. The outcome is almost identical with that when the makeup material is applied onto a real thing. If an image is formed on a flat surface, as is an ordinary photographic image, this image is far from a true-to-life appearance. Even upon application of the makeup material, the material-coated product is far from the real thing, and the makeup material bleeds.

As will be understood from the above explanations, according to the present invention, the resulting ink-j et printed image 5 is an image obtained by ink-jet printing a human figure (particularly, a photograph of a face) photographed with a digital camera or the like. Thus, the makeup material to be used is a cosmetic in most cases.

Such a cosmetic may be any publicly known one, and may be in any form such as a powdery, liquid or pasty form. Eyebrow color, eyeliner, mascara, lipstick, lip liner, eye shadow, foundation, makeup base, face powder, etc. can be used, as appropriate, depending on the form, etc. of the printed image 5.

Furthermore, the above makeup material is applied onto the printed image 5 by a means conformed to its type, with the use of a brush, a writing brush, absorbent cotton, cloth or the like.

The makeup layer 7 formed by applying the makeup material can be removed, as appropriate, using a solvent such as skin cleanser, and a fresh makeup layer 7 can be formed by applying a makeup material again.

Cosmetics have been taken as an example for describing the makeup material. If the printed image 5 is not a portrait photograph, however, a liquid having a pigment dispersed therein is merely applied onto the printed image 5, and appropriately dried, whereby the makeup layer 7 can be formed. That is, gloss or the like cannot be expressed using ink-jet ink, while the makeup layer 7 can be formed, for example, using a pearly pigment comprising mica or the like coated with titanium oxide or the like. For the printed image 5 other than an image of a human figure, the makeup layer 7 is formed by use of such a pigment to impart metallic luster or the like, so that the decoration properties of the printed image 5 can be enhanced.

On the makeup layer 7 formed as above, a protective layer 9 is appropriately provided to be capable of enhancing its preservability. For long-term preservation or permanent preservation of the printed makeup product of the present invention formed with the makeup layer 7, in particular, it is desirable to form such a protective layer 9.

The above protective layer 9 is formed using a transparent water-insoluble resin. For example, a resin solution having acrylic resin, urethane resin, or vinyl chloride resin dissolved in a solvent such as methanol, ethanol, propanol, butanol, dimethylformamide, methyl ethyl ketone, toluene, cyclohexane, or butyl acetate is coated onto the makeup layer 7 by a method such as spraying, and the coating is dried. Alternatively, a solution containing an acrylic monomer,afluorine-based monomer or the like, which is ultraviolet-curable, is coated onto the makeup layer 7, and then the coating is irradiated with ultraviolet light. By such a measure, the protective layer 9 can be formed easily. As a result, the protective layer 7 can enter the depressions of the makeup layer 7, and can securely fix the makeup layer 7.

In some cases, the protective layer 9 can be provided on the printed image 5, and the makeup layer 7 can be formed on the protective layer 9. Such a method is effective in reliably preventing the bleeding or the like of the printed image 5 during formation of the makeup layer 7.

As the protective layer to be formed as above, it is preferred to use a water-insoluble resin for the purpose of preventing the protective layer from being dissolved in water contained in a cleansing material when wiping off the makeup material with the cleansing material.

### <Uses of printed makeup product>

The printed makeup product of the present invention can be utilized for permanent preservation or long-term preservation of various printed images 5 by applying makeup. Moreover, the resulting ink-jet printed image 5 is a very true-to-life image. Thus, the printed makeup product is utilized, for example, for makeup at a cosmetics counter (may be called touchup) by making use of the means for formation of the makeup layer 7 so that it is preferably used for advice onmakeup or the sale of cosmetics. That is, a photograph of a customer's face is taken, and printed by an ink-j et printer on the inorganic solid layer 3 of the printing sheet 20 to form a printed image 5 of the face photograph. On the spot, a makeup material is applied to the printed image 5 to form a makeup layer 7. By so doing, the makeup effect can be recognized visually in the form of the printed product.

This type of usage of the printed product has so far been utterly unknown.

### Examples

The excellent effects of the present invention will be explained by the following experimental examples.

Testingmethods and test materials used in the experimental examples will be shown below.

### <Various evaluations and measuring methods>

(1) Method for measuring quantity of depressions or protrusions of inorganic solid layer or nonwoven fabric:
   Using an electron microscope (Qanta 200, Genesis 2000, produced by EFI Company), the surface of the inorganic solid layer or the nonwoven fabric was photographed as a digital image magnified 100 times. Using an image processing software (Pop Imaging 4.00, produced by Digital being kids Ltd.), the obtained digital image data were binarized by the discrimination analysis method to clearly distinguish between the depressions and the protrusions. Further, using the image measuring function of the image processing software, the total number and area ratio of the depressions or the protrusions per unit area were measured.

### (2) Printing by ink-jet printer

Images were printed on laminated sheets (size A4), which were prepared under the conditions shown in Examples and Comparative Examples, by an ink-jet printer (PX-5V, produced by Epson Corporate, using an aqueous ink having a pigment dispersed therein).

### (3) Makeup characteristics

A commercially available makeup material was applied by a makeup artist onto a sheet having an ink-jet printed image (photographic image of a human figure) formed on the inorganic solid layer 3 to obtain a printed makeup product according to the present invention. Separately, the same makeup material was applied to a printed product having an ink-jet printed image of a portrait photograph formed on a commercially available ink-jet paper to obtain a comparative product. These products were evaluated visually in comparison with the human skin under the following criteria:

### [Evaluation criteria]

⊚ Very similar to human skin.
○ Slightly similar to human skin.
Δ Slightly different from human skin.
× Utterly different from human skin.

### (4) Cleansing characteristics:

Commercially available foundation was applied by a makeup artist to a sheet having an ink-jet printed image formed on the inorganic solid layer 3 to obtain a printed makeup product according to the present invention. On the other hand, an ink-j et printed image of a portrait photograph was formed on a commercially available ink-jet paper, and the same foundation was applied to the ink-jet printed image to obtain a printed product. Further, an ink-jet printed image of a portrait photograph was formed on another commercially available ink-j et paper, and the same foundation was applied to the ink-j et printed image to obtain a printed product. In connection with these printed products, the foundation was wiped off using a commercially available makeup-removing cleansing sheet, and evaluations were made under the following criteria:

### [Evaluation criteria]

○ The foundation was removed cleanly.
Δ The foundation remained in some parts of the product.
× The foundation remained in half or more of the product.

### <Materials used>

(1) Wood pulp paper:
   Ink-jet paper "FK Slat R-IJ" (trade name), produced by FUJIKYOWA SEISHI.
   (thickness 0.17 mm, weight 160 g/m²)
(2) Calcium hydroxide:
   "Highly Pure Slaked Lime CH" (trade name), produced by Ube Material Industries, Ltd.
   Average particle size (D₅₀) = 7.5 µm
(3) Calcium carbonate:
   "White 7" (trade name), produced by YAKUSEN SEKKAI Co., Ltd.
   Average particle size (D₅₀) = 5.5 µm
(4) Silica:
   "Finesil" (trade name), produced by Tokuyama Corporation Average particle size (D₅₀) = 5.0 µm
(5) Aqueous emulsion of acrylic resin
   "Polytron A 1480" (trade name), produced by ASAHI CHEMICAL INDUSTRY CO., LTD.
   Solids content 40% by weight
(6) Fine powder of alumina hydrate
   Average particle size (D₅₀) = 0.05 µm, oil absorption 180 ml/100 g
(7) Nonwoven fabric A:
   Core-sheath fiber nonwoven fabric, produced by SHINWA Co., Ltd.
   Core: polypropylene, Sheath: polyethylene
   Fiber diameter: 0.02 mm, thickness: 0.12 mm, weight: 60 g/m²

### (Preparation Examples 1 and 2)

The nonwoven fabric A was treated with a hot calendar to obtain nonwoven fabrics α and β shown in Table 1. The total numbers and the area ratios of depressions in these nonwoven fabrics were measured by the above-described measuring methods. The results are shown in Table 1.

**Table 1**

| Nonwoven fabric | Nonwoven fabric sheet used | *1 | *2 | *3 | *4 |
|---|---|---|---|---|---|
| Nonwoven fabric α | nonwoven fabric A | 125 | 0.11 | 140 | 25 |
| Nonwoven fabric β | nonwoven fabric A | 135 | 0.10 | 120 | 18 |

| | | | | | |
|---|---|---|---|---|---|
| *1: Heating temperature (°C) *2: Average thickness (mm) *3: Total number of depressions (per mm²) *4: Area ratio of depressions (%) | | | | | |

Components were kneaded together according to the following formulation

| | |
|---|---|
| calcium hydroxide | 100 parts by weight |
| aqueous emulsion of acrylic resin | 60 parts by weight |
| water | 20 parts by weight |
| liquid-absorbing inorganic powder (fine powder of alumina hydrate) | 5 parts by weight |

to obtain an inorganic slurry.

A wood pulp paper (300×300 mm) was used as a base sheet, and its surface was coated with the resulting inorganic slurry by means of a bar coater. Immediately thereafter, the nonwoven fabrics α and β shown in Table 1 were each pressure-bonded to the surface of the slurry. This composite was dried in a dryer at 75°C for 15 minutes.

The nonwoven fabric closely adhered to the surface of the resulting laminated sheet was peeled off to obtain printing sheets A and B. There was no deposition of the fibers on the surface of the inorganic solid layer after the nonwoven fabric α or β was peeled off. Next, the total numbers and area ratios of protrusions per unit area on the surfaces of the inorganic solid layers of the printing sheets A and B were measured by the above-mentioned measuring methods. The results are shown in Table 2.

**Table 2**

| Printing sheet | Nonwoven fabric used | *1 | *2 | *3 | *4 |
|---|---|---|---|---|---|
| A | α | 0.15 | 176 | 70 | none |
| B | β | 0.15 | 143 | 81 | none |

| | | | | | |
|---|---|---|---|---|---|
| *1: Thickness of inorganic solid layer (mm) *2: Total number of protrusions (per mm²) *3: Area ratio of depressions (%) *4: Presence or absence of remaining fibers | | | | | |

### (Preparation Examples 3 and 4)

**Components were kneaded together according to the following formulation**

| | |
|---|---|
| silica | 100 parts by weight |
| aqueous emulsion of acrylic resin | 80 parts by weight |
| water | 10 parts by weight |
| liquid-absorbing inorganic powder (fine powder of alumina hydrate) | 5 parts by weight |

to obtain an inorganic slurry.

A wood pulp paper (300×300 mm) was used as a base sheet, and its surface was coated with the resulting inorganic slurry by means of a bar coater. Immediately thereafter, the nonwoven fabrics α and β shown in Table 1 were each pressure-bonded to the surface of the slurry. This composite was dried in a dryer at 80°C for 30 minutes.

The nonwoven fabric closely adhered to the surface of the resulting laminated sheet was peeled off to obtain printing sheets C and D. There was no deposition of fibers on the surface of the inorganic solid layer after the nonwoven fabric α or β was peeled off. Next, the total numbers and area ratios of protrusions per unit area on the surfaces of the inorganic solid layers of the printing sheets C and D were measured by the above-mentioned measuring methods. The results are shown in Table 3.

**Table 3**

| Printing sheet | Nonwoven fabric used | *1 | *2 | *3 | *4 |
|---|---|---|---|---|---|
| C | α | 0.11 | 189 | 65 | none |
| D | β | 0.12 | 167 | 74 | none |

| | | | | | |
|---|---|---|---|---|---|
| *1: Thickness of inorganic solid layer (mm) *2: Total number of protrusions (per mm2) *3: Area ratio of depressions (%) *4: Presence or absence of remaining fibers | | | | | |

### (Examples 1 and 2)

The surfaces of the inorganic solid layers of the printing sheets A and B obtained in Preparation Examples 1 and 2 were printed with an image of a woman of the same size as the face of the woman by an ink-jet printer. The printed sheets were dried for 5 hours at room temperature, and then allowed to stand for 72 hours in a constant temperature and humidity chamber at a carbon dioxide gas concentration of 5% and a humidity of 60% RH to carry out carbonation. The carbonation rates of the inorganic solid layers of the carbonated printing sheets A and B were 76% and 81%, respectively.

A commercially available makeup material was applied to each of the printing sheets treated in the above manner, and makeup characteristics were evaluated. Cleansing characteristics in the part subjected to the application of the commercially available makeup material were also evaluated. The results are shown in Table 5.

Then, an acrylic resin (S-LEC BM-1, produced by Sekisui Chemical Co. , Ltd.) was dissolved in isopropanol (IPA), and the resulting solution was adjusted to a concentration of 6% by weight to form a water-insoluble resin solution. The resin solution was coated by a spray onto the image given the makeup material, and dried for 2 hours at room temperature. The dried coating was wiped off with a commercially available makeup-removing cleansing sheet, with the result that the makeup material was strongly fixed without differing from the original state before the coating was peeled off.

### (Example 3 and 4)

The surfaces of the inorganic solid layers of the carbonated printing sheets after printing, which were obtained in Examples 1 and 2, were coated by a spray with the same water-insoluble resin solution as in Examples 1 and 2, and dried for 2 hours at room temperature.

Then, using the printing sheets coated with the water-insoluble resin, a commercially available makeup material was applied thereto as in Examples 1 and 2, and makeup characteristics were evaluated. Cleansing characteristics in the part subjected to the application of the commercially available makeup material were also evaluated. The results are shown in Table 5.

Further, the same water-insoluble resin solution as in Examples 1 and 2 was coated by a spray onto the image given the makeup material, and was dried for 2 hours at room temperature. The dried coating was wiped off with a commercially available makeup-removing cleansing sheet. The result was that the makeup material remained the same as before the coating was peeled off, and strong fixing of the makeup material occurred.

### (Examples 5 and 6)

The surfaces of the inorganic solid layers of the printing sheets C and D obtained in Preparation Examples 3 and 4 were printed with an image of a woman of the same size as the face of the woman by an ink-jet printer. The printed sheets were dried for 12 hours at room temperature.

A commercially available makeup material was applied to each of the printing sheets obtained in the above manner, and makeup characteristics were evaluated. Cleansing characteristics in the part subjected to the application of the commercially available makeup material were also evaluated. The results are shown in Table 5.

Then, an acrylic resin (S-LEC BM-1, produced by Sekisui Chemical Co. , Ltd.) was dissolved in isopropanol (IPA), and the resulting solution was adjusted to a concentration of 6% by weight to form a water-insoluble resin solution. The resin solution was coated by a spray onto the image given the makeup material, and was dried for 2 hours at room temperature. The dried coating was wiped off with a commercially available makeup-removing cleansing sheet. The result was that the makeup material remained the same as before the coating was peeled off, and strong fixing of the makeup material occurred.

### (Examples 7 and 8)

The surfaces of the inorganic solid layers of the printing sheets C and D after printing, which were obtained in Examples 5 and 6, were coated by a spray with the same water-insoluble resin solution as in Examples 1 and 2, and dried for 2 hours at room temperature.

Then, using the printing sheets coated with the water-insoluble resin, a commercially available makeup material was applied thereto as in Examples 1 and 2, and makeup characteristics were evaluated. Cleansing characteristics in the part subjected to the application of the commercially available makeup material were also evaluated. The results are shown in Table 5.

Further, the same water-insoluble resin solution as in Examples 1 and 2 was coated by a spray onto the image given the makeup material, and was dried for 2 hours at room temperature. The dried coating was wiped off with a commercially available makeup-removing cleansing sheet. The result was that the makeup material remained the same as before the coating was peeled off, and strong fixing of the makeup material occurred.

### (Comparative Examples 1 and 2)

The total numbers and area ratios of depressions per unit area were measured using commercially available ink-jet papers A and B instead of the printing sheets used in the Preparation Examples. The results are shown in Table 4. Then, an image of a woman of the same size as the face of the woman was printed on the papers by an ink-jet printer in the same manner as in the Examples.

A commercially available makeup material was applied to the ink-jet papers obtained in the above manner, and makeup characteristics were evaluated. Cleansing characteristics in the part subjected to the application of the commercially available makeup material were also evaluated. The results are shown in Table 5. When the makeup material was wiped off with the cleansing material, the ink-jet paper swelled with water contained in the cleansing material, and the makeup residue permeated the paper along with the makeup material, thus making wiping-off difficult.

**Table 4**

| Ink-jet paper | Surface quality | Total number of protrusions (per mm²) | Area ratio of protrusions (%) |
|---|---|---|---|
| A | matte | 35 | 76 |
| B | matte | 69 | 80 |

**Table 5**

| | | Makeup characteristics evaluation | | | Cleansing characteristics evaluation |
|---|---|---|---|---|---|
| Ex./Comp. Ex. | Printing paper | Foundation | Eye shadow | Lipstick | |
| Example 1 | printing sheet A | ⊚ | ○ | ○ | Δ |
| Example 2 | printing sheet B | ⊚ | ○ | ○ | Δ |
| Example 3 | printing sheet A | ⊚ | ⊚ | ⊚ | ○ |
| Example 4 | printing sheet B | ⊚ | ⊚ | ⊚ | ○ |
| Example 5 | printing sheet C | ○ | Δ | ○ | Δ |
| Example 6 | printing sheet D | ○ | Δ | ○ | Δ |
| Example 7 | printing sheet C | ⊚ | ⊚ | ⊚ | ○ |
| Example 8 | printing sheet D | ⊚ | ⊚ | ⊚ | ○ |
| Comparative Example 1 | commercially available ink-jet paper A | Δ | × | Δ | × |
| Comparative Example 2 | commercially available ink-jet paper B | Δ | × | Δ | × |

### Explanations of Letters or Numerals

- 1:: Base sheet
- 3:: Inorganic solid layer
- 5:: Ink-jet printed image
- 7:: Makeup layer
- 9:: Protective layer
- 10:: Fiber sheet
- 20:: Printing sheet

## Claims

1. A printed makeup product, including:
a base sheet;
an inorganic solid layer provided on the base sheet;
an ink-jet printed image formed on the inorganic solid layer;
a makeup material applied onto the ink-jet printed image;
wherein
a surface of the inorganic solid layer, upon observation in an electron micrograph at a magnification of 100, is a rough surface where indefinitely shaped protrusions are present in a proportion of 10 to 30% per unit area, and
50 to 300 of the indefinitely shaped protrusions per mm² are observed having a major diameter of 10 to 300 µm.

2. The printed makeup product according to claim 2, wherein
the inorganic solid layer contains calcium hydroxide.

3. The printed makeup product according to claim 1, wherein
the rough surface of the inorganic solid layer is formed by closely adhering a fiber sheet to the inorganic solid layer, and peeling off the fiber sheet.

4. The printed makeup product according to claim 1, wherein
a protective layer of a water-insoluble resin is formed on a layer of the makeup material or on the ink-jet printed image.

5. The printed makeup product according to claim 4, wherein
the water-insoluble resin is an acrylic resin.

6. A makeup method, including:
providing a printing sheet comprising a base sheet, an inorganic solid layer provided on the base sheet, and a fiber sheet closely adhered onto the inorganic solid layer;
peeling off the fiber sheet from the printing sheet to turn a surface of the inorganic solid layer into a rough surface;
forming an ink-jet printed image of a portrait photograph on the rough surface by ink-jet printing; and
applying a makeup material to the ink-jet printed image.

7. The makeup method according to claim 6, wherein
the surface of the inorganic solid layer, upon observation in an electron micrograph at a magnification of 100, is the rough surface where indefinitely shaped protrusions are present in a proportion of 10 to 30% per unit area, and
50 to 300 of the indefinitely shaped protrusions per mm² are observed having a major diameter of 10 to 300 µm.
